# EUROPÄISCHE PATENTANMELDUNG

(11) **EP 2 468 496 A1**
(43) Veröffentlichungstag der Anmeldung: **27.06.2012**
(21) Anmeldenummer: 10196413.8
(22) Anmeldetag: 22.12.2010
(51) Int. Cl.: B32B 5/20, B32B 27/40, C08G 18/28, C08G 18/40, C08G 18/12, C08G 18/72, C08G 18/08

(54) **Umhüllter Artikel**

(71) Anmelder: Bayer MaterialScience AG, 51368 Leverkusen (DE)
(72) Erfinder: Niesten, Meike, 51368 Leverkusen (DE); Bueschel, Gerd, 29669 Bomlitz (DE)
(74) Vertreter: Dern, Martin

(57) **Zusammenfassung**

Die vorliegende Erfindung betrifft einen umhüllten Artikel (1) umfassend wenigstens eine Barriere-Folie (2a, 2b), eine Schaumschicht (3) und eine Funktionseinheit (4), wobei die Schaumschicht (3) die Funktionseinheit (4) zumindest bereichweise umhüllt, die Barriere-Folie (2a, 2b) die Schaumschicht (3) und die Funktionseinheit (4) umschließt und die Schaumschicht (3) einen thermoplastischen Polymerschaum beinhaltet, der zumindest bereichsweise über eine Schweißnaht (7) mit der Barriere-Folie (2a, 2b) verbunden ist. Weitere Gegenstände der Erfindung sind ein Verfahren zur Herstellung des umhüllten Artikels (1) sowie ein nach dem erfindungsgemäßen Verfahren erhältlicher umhüllter Artikel (1).

## Beschreibung

Die vorliegende Erfindung betrifft einen umhüllten Artikel umfassend wenigstens eine Barriere-Folie, eine Schaumschicht und eine Funktionseinheit, wobei die Schaumschicht die Funktionseinheit zumindest bereichweise umhüllt und die Barriere-Folie die Schaumschicht und die Funktionseinheit umschließt. Weitere Gegenstände der Erfindung sind ein Verfahren zur Herstellung des umhüllten Artikels sowie ein nach dem erfindungsgemäßen Verfahren erhältlicher umhüllter Artikel.

Im Stand der Technik sind umhüllte Artikel wie zum Beispiel medizinische Sensoren zur Applikation auf der Haut bekannt. Diese umfassen häufig eine elektrische Funktionseinheit zur Bestimmung physiologischer Parameter wie Herzfrequenz oder Hautfeuchtigkeit, die ganz oder teilweise von einer Schaumschicht umhüllt sind. Mit Hilfe der Schaumschicht soll die Funktionseinheit einerseits vor mechanischen Beschädigungen geschützt und andererseits den Tragekomfort erhöht werden. Weiterhin ist in vielen Fällen auch eine Barriere-Folie vorhanden, die wiederum die Schaumschicht und die Funktionseinheit umschließt. Aufgabe der Barriere-Folie ist es, das Eindringen von Feuchtigkeit und Schmutz zu verhindern, da es ansonsten zu Beschädigungen der Funktionseinheit kommen kann.

Zur Herstellung der bekannten umhüllten Artikel ist es notwendig, die Schaumschicht und die Barriere-Folie miteinander in einem separaten Schritt zu verkleben. Dies ist aufwendig. Darüber hinaus gelingt es hierbei nicht immer, einen Verbund herzustellen, der eine ausreichende mechanische Stabilität und Dichtigkeit auch bei längerer Nutzung aufweist.

Aufgabe der vorliegenden Erfindung war es daher, einen einfacher herzustellenden besonders dichten und mechanisch belastbaren umhüllten Artikel bereit zu stellen.

Diese Aufgabe wird bei dem umhüllten Artikel der Erfindung dadurch gelöst, dass die Schaumschicht einen thermoplastischen Polymerschaum beinhaltet, der zumindest bereichsweise über eine Schweißnaht mit der Barriere-Folie verbunden ist.

Grundgedanke der Erfindung ist es somit, eine Schaumschicht zu verwenden, die einen thermoplastischen Polymerschaum beinhaltet. Unter einem thermoplastischen Polymerschaum wird vorliegend ein Schaum verstanden, der ein thermoplastisches Polymer enthält bzw. der im Wesentlichen aus einem thermoplastischen Polymer besteht. Wie dem Fachmann bekannt ist, zeichnen sich thermoplastische Polymere dadurch aus, dass sie durch Erwärmung in den schmelzflüssigen Zustand überführt werden können. Dies ermöglicht es, den thermoplastischen Polymerschaum leicht zumindest bereichsweise mit der Barriere-Folie zu verschweißen, so dass kein zusätzlicher Klebstoff notwendig ist, um diese Verbindung herzustellen. Darüber hinaus zeichnet sich die erhaltene Schweißnaht durch eine hohe Dichtigkeit und eine besondere mechanische Stabilität aus.

Gemäß einer ersten bevorzugten Ausführungsform der Erfindung ist vorgesehen, dass der Polymerschaum lineare Polyurethane enthält. Unter linearen Polyurethanen werden vorliegend ganz oder im wesentlichen unverzweigt Polymere verstanden, die in der Polymerkette Urethangruppen enthalten. Polymerschäume, die lineare Polyurethane enthalten bzw. im Wesentlichen hieraus bestehen, zeichnen sich durch eine besonders hohe Elastizität und Komprimierbarkeit sowie eine besonders gute Verschweißbarkeit aus.

Weiter bevorzugt ist, wenn der Polymerschaum erhältlich ist, indem eine Zusammensetzung umfassend eine wässrige, anionisch hydrophilierte Dispersion der linearen Polyurethane aufgeschäumt und getrocknet wird.

Die Polyurethandispersion kann dabei Polyurethane enthalten, deren freie Isocyanatgruppen zumindest teilweise mit anionischen oder potentiell anionischen Hydrophilierungsmitteln umgesetzt sind. Geeignete Hydrophilierungsmittel sind beispielsweise Verbindungen, die gegenüber Isocyanatgruppen reaktive funktionelle Gruppen wie Amino-, Hydroxy- oder Thiolgruppen und weiterhin Säure- oder Säureaniongruppen wie Carboxylat-, Sulfonat- oder Phosphonatgruppen aufweisen.

Das Aufschäumen kann durch mechanisches Rühren der Zusammensetzung bei hohen Drehzahlen, durch Schütteln oder durch Entspannung eines Treibgases erfolgen. Hierbei können Stickstoff oder andere Gase in die Zusammensetzung eingetragen werden. Besonders bevorzugt wird Luft in die Zusammensetzung eingetragen.

Die Trocknung erfolgt vorzugsweise bei einer Temperatur zwischen 30 und 200 und bevorzugt zwischen 30 und 140 °C. Zur Trocknung können an sich bekannten Heiz- und Trockenapparaten, wie (Umluft-) Trockenschränken, Heißluft, IR-Strahlern oder Mikrowellentrocknung eingesetzt werden.

Der Polymer-Schaum hat vor seiner Trocknung typischerweise eine Schaumdichte von ≥ 50 g/Liter bis ≤ 800 g/Liter, bevorzugt von ≥ 100 g/Liter bis ≤ 500 g/Liter, besonders bevorzugt von ≥ 100 g/Liter bis ≤ 400 g/Liter (Masse aller Einsatzstoffe [in g] bezogen auf das Schaumvolumen von einem Liter).

Nach seiner Trocknung hat der Schaum eine mikroporöse, zumindest teilweise offenporige Struktur mit miteinander kommunizierenden Zellen. Die Dichte des getrockneten Schaums ist typischerweise ≤0,5 g/cm³, bevorzugt ≤ 0,35 g/cm³, besonders bevorzugt ≥0,01 g/cm³ und ≤ 0,3 g/cm³ und ganz besonders bevorzugt ≥ 0,1 g/cm³ und ≤ 0,3 g/cm³.

Im komprimierten Zustand kann der Schaum eine Dichte von ≥ 1 g/cm³ bis ≤ 1,8 g/cm³ aufweisen. Die Dichte kann auch in einem Bereich von ≥ 1,2 g/cm³ bis ≤ 1,6 g/cm³ oder von ≥ 1,4 g/cm³ bis ≤ 1,5 g/cm³ liegen.

Wenn der Schaum besonders stark komprimiert wird, kann er zu einem Film oder einer Folie verformt werden.

Der Polymerschaum kann mit Hilfe bekannter Verfahren in die gewünschte Form gebracht werden. So kann er beispielsweise zugeschnitten werden.

In Weiterbildung der Erfindung ist vorgesehen, dass die wässrige, anionisch hydrophilierte Dispersion linearer Polyurethane erhältlich ist, indem
A) isocyanatfunktionelle Prepolymere bereitgestellt werden, die aus einer Reaktionsmischung umfassend
   A1) organische Polyisocyanate und
   A2) polymere Polyole, bevorzugt mit zahlenmittleren Molekulargewichten von ≥ 400 g/mol bis ≤ 8000 g/mol und OH-Funktionalitäten von ≥ 1,5 bis ≤ 6,
   erhältlich sind und
B) die freien NCO-Gruppen der Prepolymere ganz oder teilweise mit
   B1) isocyanatreaktiven anionischen oder potentiell anionischen Hydrophilierungsmitteln
   unter Kettenverlängerung umgesetzt werden und die Prepolymere vor, während oder nach Schritt B) in Wasser dispergiert werden, wobei weiterhin in der Reaktionsmischung vorliegende potentiell ionische Gruppen durch teilweise oder vollständige Umsetzung mit einem Neutralisationsmittel in die ionische Form überführt werden.

Bevorzugte wässrige, anionische Polyurethan-Dispersionen haben einen niedrigen Grad an hydrophilen anionischen Gruppen, bevorzugt von ≥ 0,1 bis ≤ 15 Milliequivalenten pro 100 g Festharz.

Um eine gute Sedimentationsstabilität zu erreichen, liegt die zahlenmittlere Teilchengröße der speziellen Polyurethan-Dispersionen bevorzugt bei ≤ 1500 nm, besonders bevorzugt bei ≤ 1000 nm, bestimmt mittels Laserkorrelations-Spektroskopie.

Die aminofunktionellen Verbindungen in Stufe B) werden in solch einer Menge eingesetzt, dass das Äquivalentverhältnis von isocyanatreaktiven Aminogruppen dieser Verbindungen zu den freien Isocyanatgruppen des Prepolymers ≥ 40% bis ≤ 150%, bevorzugt zwischen ≥ 50% und ≤ 125%, besonders bevorzugt zwischen ≥ 60% und ≤ 120% beträgt.

Geeignete Polyisocyanate der Komponente A1) sind aromatische, araliphatische, aliphatische oder cycloaliphatische Polyisocyanate mit einer NCO-Funktionalität von ≥ 2.

Beispiele geeigneter Polyisocyanate sind 1,4-Butylendiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI), 1,3- und/oder 1,4-Bis-(2-isocyanato-prop-2-yl)-benzol (TMXDI), 1,3-Bis- (isocyanatomethyl)benzol (XDI), sowie Alkyl-2,6-diisocyanatohexanoate (Lysindiisocyanate) mit C₁- bis C₈-Alkylgruppen.

Neben den vorstehend genannten Polyisocyanaten können anteilig auch modifizierte Diisocyanate mit Uretdion-, Isocyanurat-, Urethan-, Allophanat-, Biuret-, Iminooxadiazindion-und/oder Oxadiazintrionstruktur sowie nicht-modifïziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan- 4,4',4"-triisocyanat mit eingesetzt werden.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen und einer mittleren NCO-Funktionalität der Mischung von ≥ 2 bis ≤ 4, bevorzugt ≥ 2 bis ≤ 2,6 und besonders bevorzugt ≥ 2 bis ≤ 2,4.

Besonders bevorzugt werden in A1) 1,6-Hexamethylendiisocyanat, Isophorondiisocyanat, die isomeren Bis(4,4'-isocyanatocyclohexyl)methane sowie deren Mischungen eingesetzt.

In A2) werden bevorzugt polymere Polyole mit einem zahlenmittleren Molekulargewicht von ≥ 400 g/mol bis ≤ 8000 g/mol, bevorzugt von ≥ 400 g/mol bis ≤ 6000 g/mol und besonders bevorzugt von ≥ 600 g/mol bis ≤ 3000 g/mol eingesetzt. Diese weisen bevorzugt eine OH-Funktionalität von ≥ 1,5 bis ≤ 6, besonders bevorzugt von ≥ 1,8 bis ≤ 3, ganz besonders bevorzugt von ≥ 1,9 bis ≤ 2,1 auf.

Geignete Polyole sind beispielsweise Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole. Diese können in A2) einzeln oder in beliebigen Mischungen untereinander eingesetzt werden.

Geignete Polyesterpolyole sind Polykondensate aus Di- sowie gegebenenfalls Tri- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Neopentylglykol und Hydroxypivalinsäureneopenthylglykolester bevorzugt sind. Daneben können auch Polyole wie Trimethylolpropan, Glycerin, Erythrit, Pentaerythrit, Triemthylolbenzol oder Trishydroxyethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2- Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Bevorzugte Säuren sind aliphatische oder aromatische Säuren der vorstehend genannten Art. Besonders bevorzugt sind Adipinsäure, Isophthalsäure und gegebenenfalls Trimellithsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Ebenfalls können in A2) Hydroxylgruppen aufweisende Polycarbonate, bevorzugt Polycarbonatdiole, mit zahlenmittleren Molekulargewichten von ≥ 400 g/mol bis ≤ 8000 g/mol, bevorzugt ≥ 600 g/mol bis ≤ 3000 g/mol eingesetzt werden. Diese sind durch Reaktion von Kohlensäurederivaten wie Diphenylcarbonat, Dimethylcarbonat oder Phosgen mit Polyolen, bevorzugt Diolen, erhältlich.

Beispiele geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Bevorzugt enthält das Polycarbonatdiol ≥ 40 Gewichts-% bis ≤ 100 Gewichts-% Hexandiol, bevorzugt 1,6-Hexandiol und/oder Hexandiolderivate. Solche Hexandiolderivate basieren auf Hexandiol und weisen neben endständigen OH-Gruppen auch Ester- oder Ethergruppen auf. Solche Derivate sind durch Reaktion von Hexandiol mit überschüssigem Caprolacton oder durch Veretherung von Hexandiol mit sich selbst zum Di- oder Trihexylenglykol erhältlich. Statt oder zusätzlich zu reinen Polycarbonatdiolen können auch Polyether-Polycarbonatdiole in A2) eingesetzt werden.

Die Hydroxylgruppen aufweisenden Polycarbonate sind bevorzugt linear gebaut.

Ebenfalls können in A2) Polyetherpolyole eingesetzt werden.

Geeignet sind beispielsweise Polytetramethylenglykolpolyether, wie sie durch Polymerisation von Tetrahydrofuran mittels kationischer Ringöffhung erhältlich sind.

Ebenfalls geeignete Polyetherpolyole sind die Additionsprodukte von Styroloxid, Ethylenoxid, Propylenoxid, Butylenoxid und/oder Epichlorhydrin an di- oder polyfunktionelle Startermoleküle. Polyetherpolyole, basierend auf der zumindest anteiligen Addition von Ethylenoxid an dioder polyfunktionelle Startermoleküle, können auch als Komponente A4) eingesetzt werden (nichtionische Hydrophilierungsmittel).

Als geeignete Startermoleküle eingesetzt werden können beispielsweise Wasser, Butyldiglykol, Glycerin, Diethylenglykol, Trimethyolpropan, Propylenglykol, Sorbit, Ethylendiamin, Triethanolamin oder 1,4-Butandiol. Bevorzugte Startermoleküle sind Wasser, Ethylenglykol, Propylenglykol, 1,4-Butandiol, Diethylenglykol und Butyldiglykol.

Besonders bevorzugte Ausführungsformen der Polyurethan-Dispersionen enthalten als Komponente A2) eine Mischung aus Polycarbonatpolyolen und Polytetramethylenglykolpolyolen, wobei in dieser Mischung der Anteil an Polycarbonatpolyolen in der Mischung > 20 Gewichts-% bis ≤ 80 Gewichts-% und der Anteil an Polytetramethylenglykolpolyolen ≥ 20 Gewichts-% bis ≤ 80 Gewichts-% beträgt. Bevorzugt ist ein Anteil von ≥ 30 Gewichts-% bis < 75 Gewichts-% an Polytetramethylenglykolpolyolen und ein Anteil von ≥ 25 Gewichts-% bis ≤ 70 Gewichts-% an Polycarbonatpolyolen. Besonders bevorzugt ist ein Anteil von ≥ 35 Gewichts-% bis ≤ 70 Gewichts-% an Polytetramethylenglykolpolyolen und ein Anteil von ≥ 30 Gewichts-% bis ≤ 65 Gewichts-% an Polycarbonatpolyolen, jeweils mit der Maßgabe, dass die Summe der Gewichtsprozente der Polycarbonatpolyole und Polytetramethylenglykolpolyole ≤ 100 Gewichts-% ergibt und der Anteil der Summe der Polycarbonatpolyole und Polytetramethylenglykolpolyetherpolyole an der Komponente A2) ≥ 50 Gewichts-%, bevorzugt ≥ 60 Gewichts-% und besonders bevorzugt ≥ 70 Gewichts-% beträgt.

Unter isocyanatreaktiven anionischen oder potentiell anionischen Hydrophilierungsmitteln der Komponente B1) werden sämtliche Verbindungen verstanden, die mindestens eine isocyanatreaktive Gruppe wie eine Amino-, Hydroxy- oder Thiolgruppe sowie mindestens eine Funktionalität, die bei Wechselwirkung mit wässrigen Medien ein pH-Wert-abhängiges Dissoziationsgleichgewicht eingeht und auf diese Weise negativ oder neutral geladen sein kann, wie zum Beispiel -COO⁻M⁺, -SO₃⁻M⁺, -PO(O⁻M⁺)₂, wobei M⁺ ein Metallkation, H⁺, NH₄⁺ oder NHR₃⁺ und R jeweils ein C₁-C₁₂-Alkylrest, ein C₅-C₆-Cycloalkylrest und/oder ein C₂-C₄-Hydroxyalkylrest sein kann, aufweisen.

Vorzugsweise sind die isocyanatreaktiven anionischen oder potentiell anionischen Hydrophilierungsmittel isocyanatreaktive aminofunktionelle anionische oder potentiell anionische Hydrophilierungsmittel.

Geeignete anionisch oder potentiell anionisch hydrophilierende Verbindungen sind Mono- und Diaminocarbonsäuren, Mono- und Diaminosulfonsäuren sowie Mono- und Diaminophosphonsäuren und ihre Salze. Beispiele solcher anionischen oder potentiell anionischen Hydrophilierungsmittel sind N-(2-Aminoethyl)-ß-alanin, 2-(2-Amino-ethylamino)-ethansulfonsäure, Ethylendiaminpropyl- oder -butylsulfonsäure, 1,2- oder 1,3-Propylendiamin-β-ethylsulfonsäure, Glycin, Alanin, Taurin, Lysin, 3,5-Diaminobenzoesäure und das Additionsprodukt von IPDA und Acrylsäure (EP- A 0 916 647, Beispiel 1). Weiterhin kann die aus der WO-A 01/88006 bekannte Cyclohexylaminopropansulfonsäure (CAPS) als anionisches oder potentiell anionisches Hydrophilierungsmittel verwendet werden.

Bevorzugte anionische oder potentiell anionische Hydrophilierungsmittel der Komponente B1) sind solche der vorstehend genannten Art, die über Carboxylat- beziehungsweise Carobonsäuregruppen und/oder Sulfonatgruppen verfügen. Beispiele sind die Salze von N-(2-Aminoethyl)-β-alanin, der 2-(2-Aminoethylamino)ethansulfonsäure oder des Additionsproduktes von IPDA und Acrylsäure (EP-A 0 916 647, Beispiel 1).

Zur Hydrophilierung können auch Mischungen aus anionischen beziehungsweise potentiell anionischen Hydrophilierungsmitteln und nichtionischen Hydrophilierungsmitteln verwendet werden.

In einer weiteren Ausführungsform umfasst die Reaktionsmischung in Schritt A) weiterhin:
A3) hydroxyfunktionelle Verbindungen mit Molekulargewichten von ≥ 62 g/mol bis ≤ 399 g/mol.

In A3) können Polyole des genannten Molekulargewichtsbereichs mit bis zu 20 Kohlenstoffatomen, wie Ethylenglykol, Diethylenglykol, Triethylenglykol, 1,2-Propandiol, 1,3-Propandiol, 1,4- Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A, (2,2-Bis(4-hydroxycyclohexyl)propan), Trimethylolpropan, Glycerin, Pentaerythrit sowie deren beliebige Mischungen untereinander eingesetzt werden.

Geeignet sind auch Esterdiole des genannten Molekulargewichtsbereichs wie α-Hydroxybutyl-ε-hydroxycapronsäureester, ω-Hydroxyhexyl-γ-hydroxybuttersäureester, Adipinsäure-(β-hydroxyethyl)ester oder Terephthalsäurebis(β-hydroxyethyl)-ester.

Ferner können in A3) auch monofunktionelle, isocyanatreaktive, Hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Ethylenglykolmonobutylether, Diethylenglykolmonobutylether, Propylenglykolmonomethylether, Dipropylenglykolmonomethylether, Tripropylenglykolmonomethylether, Dipropylenglykolmonopropylether, Propylenglykolmonobutylether, Dipropylenglykolmonobutylether, Tripropylenglykolmonobutylether, 2- Ethylhexanol, 1-Octanol, 1-Dodecanol, 1-Hexadecanol.

Bevorzugte Verbindungen der Komponente A3) sind 1,6-Hexandiol, 1,4-Butandiol, Neopentylglykol und Trimethylolpropan.

In einer weiteren Ausführungsform umfasst die Reaktionsmischung in Schritt A) weiterhin:
A4) isocyanatreaktive, anionische oder potentiell anionische und gegebenenfalls nichtionische Hydrophilierungsmittel.

Unter anionisch beziehungsweise potentiell anionisch hydrophilierenden Verbindungen der Komponente A4) werden sämtliche Verbindungen verstanden, die mindestens eine isocyanatreaktive Gruppe wie eine Amino-, Hydroxyl- oder Thiolgruppe sowie mindestens eine Funktionalität, die bei Wechselwirkung mit wässrigen Medien ein pH-Wert-abhängiges Dissoziationsgleichgewicht eingeht und auf diese Weise negativ oder neutral geladen sein kann, wie zum Beispiel -COO⁻M⁺, -SO₃⁻M⁺, -PO(O⁻M⁺)₂, wobei M⁺ ein Metallkation, H⁺, NH₄⁺oder NHR₃⁺ und R jeweils ein C₁-C₁₂-Alkylrest, ein C₅-C₆-Cycloalkylrest und/oder ein C₂-C₄-Hydroxyalkylrest sein kann, aufweisen. Geeignete anionisch oder potentiell anionisch hydrophilierende Verbindungen sind zum Beispiel Mono- und Dihydroxycarbonsäuren, Mono-und Dihydroxysulfonsäuren sowie Mono- und Dihydroxyphosphonsäuren und ihre Salze. Beispiele solcher anionischen beziehungsweise potentiell anionischen Hydrophilierungsmittel sind Dimethylolpropionsäure, Dimethylolbuttersäure, Hydroxypivalinsäure, Äpfelsäure, Zitronensäure, Glykolsäure, Milchsäure und das propoxylierte Addukt aus 2-Butendiol und NaHSO₃, wie es in der DE-A 2 446 440, Seite 5 - 9, Formel I-III beschrieben ist.

Bevorzugte anionische oder potentiell anionische Hydrophilierungsmittel der Komponente A4) sind solche der vorstehend genannten Art, die über Carboxylat- beziehungsweise Carbonsäuregruppen und/oder Sulfonatgruppen verfügen.

Besonders bevorzugte anionische oder potentiell anionische Hydrophilierungsmittel sind solche, die Carboxylat- beziehungsweise Carbonsäuregruppen als ionische oder potentiell ionische Gruppen enthalten wie Dimethylolpropionsäure, Dimethylolbuttersäue und Hydroxypivalinsäure und/oder deren Salze.

Geeignete nichtionisch hydrophilierende Verbindungen der Komponente A4) sind zum Beispiel auch Polyoxyalkylenether, die mindestens eine Hydroxy- oder Aminogruppe, bevorzugt mindestens eine Hydroxygruppe enthalten. Beispiele hierfür sind die monohydroxyfunktionellen, im statistischen Mittel > 5 bis < 70, bevorzugt > 7 bis < 55 Ethylenoxideinheiten pro Molekül aufweisenden Polyalkylenoxidpolyetheralkohole, wie durch Alkoxylierung geeigneter Startermoleküle zugänglich sind. Diese sind entweder reine Polyethylenoxidether oder gemischte Polyalkylenoxidether, wobei sie ≥ 30 mol-%, bevorzugt ≥ 40 mol-% bezogen auf alle enthaltenen Alkylenoxideinheiten an Ethylenoxideinheiten enthalten.

Bevorzugte Polyethylenoxidether der vorstehend genannten Art sind monofunktionelle gemischte Polyalkylenoxidpolyether, die ≥ 40 mol-% bis ≤ 100 mol-% Ethylenoxid- und ≥ 0 mol-% bis ≤ 60 mol-% Propylenoxideinheiten aufweisen.

Bevorzugte nichtionisch hydrophilierende Verbindungen der Komponente A4) sind solche der vorstehend genannten Art, wobei es sich um Block(co)polymere handelt, die durch blockweise Addition von Alkylenoxiden an geeignete Starter hergestellt werden.

Geeignete Startermoleküle für solche nichtionischen Hydrophilierungsmittel sind gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykolmonoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

In einer weiteren Ausführungsform werden in Schritt B) die freien NCO-Gruppen der Prepolymere weiterhin ganz oder teilweise umgesetzt mit
B2)aminofunktionelle Verbindungen mit Molekulargewichten von ≥ 32 g/mol bis < 400 g/mol.

Als Komponente B2) können Di- oder Polyamine wie 1,2-Ethylendiamin, 1,2- und 1,3-Diamino- propan, 1,4-Diaminobutan, 1,6-Diaminohexan, Isophorondiamin, Isomerengemische von 2,2,4- und 2,4,4-Trimethylhexamethylendiamin, 2-Methylpentamethylendiamin, Diethylentriamin, Triaminononan, 1,3- und 1,4-Xylylendiamin, α,α,α',α'-Tetramethyl-1,3- und -1,4-xylylendiamin und 4,4-Diaminodicyclohexylmethan und/oder Dimethylethylendiamin eingesetzt werden. Ebenfalls möglich, aber weniger bevorzugt, ist die Verwendung von Hydrazin sowie Hydraziden wie Adipinsäuredihydrazid.

Darüber hinaus können als Komponente B2) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre / sekundäre Amine, wie Diethanolamin, 3-Amino-1-methylaminopropan, 3-Amino-1-ethylaminopropan, 3-Amino-1-cyclohexylaminopropan, 3-Amino-1-Methylaminobutan, Alkanolamine wie N-Aminoethylethanolamin, Ethanolamin, 3-Aminopropanol, Neopentanolamin. Ferner können als Komponente B2) auch monofunktionelle isocyanatreaktive Aminverbindungen, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin oder geeignete substituierte Derivate davon, Amidamine aus diprimären Aminen und Monocarbonsäuren, Monoketime von diprimären Aminen, primär/tertiäre Amine, wie N,N-Dimethylaminopropylamin eingesetzt werden. Bevorzugte Verbindungen der Komponente B2) sind 1,2-Ethylendiamin, 1,4-Diaminobutan und Isophorondiamin.

Bei einer weiteren bevorzugten Ausführungsform ist bei der Herstellung der wässrigen, anionisch hydrophilierten Polyurethan-Dispersionen die Komponente A1) ausgewählt aus der Gruppe 1,6-Hexamethylendiisocyanat, Isophorondiisocyanat und/oder die isomeren Bis-(4,4'-isocyanatocyclohexyl)methane und die Komponente A2) umfasst eine Mischung aus Polycarbonatpolyolen und Polytetramethylenglykolpolyolen, wobei der Anteil der Summe der Polycarbonatpolyole und der Polytetramethylenglykolpolyetherpolyole an der Komponente A2) > 70 Gewichts-% bis ≤ 100 Gewichts-% beträgt.

Gemäß einer weiteren bevorzugten Ausführungsform kann die Zusammensetzung Zusatzstoffe ausgewählt aus der Gruppe Fettsäureamide, Sulfosuccinamide, Kohlenwasserstoffsulfonate, Kohlenwasserstoffsulfate, Fettsäuresalze, Alkylpolyglycoside und/oder Ethylenoxid/Propylenoxid-Blockcopolymere enthalten.

Solche Zusatzstoffe können als Schaumbildner und/oder Schaumstabilisatoren wirken. In den Fettsäureamiden, Sulfosuccinamiden, Kohlenwasserstoffsulfonaten, Kohlenwasserstoffsulfaten oder Fettsäuresalzen enthält der lipophile Rest bevorzugt ≥ 12 bis ≤ 24 Kohlenstoffatome. Geeignete Alkylpolyglycoside sind beispielsweise durch Umsetzung von längerkettigen Monoalkoholen (≥ 4 bis ≤ 22 C-Atome im Alkylrest) mit Mono-, Di- oder Polysacchariden erhältlich. Weiterhin geeignet sind Alkylbenzosulfonate oder Alkylbenzolsulfate mit ≥ 14 bis ≤ 24 Kohlenstoffatomen im Kohlenwasserstoffrest.

Die Fettsäureamide sind vorzugsweise solche auf Basis von Mono- oder Di-(C₂/C₃-alkanol)aminen. Die Fettsäuresalze können beispielsweise Alkalimetallsalze, Aminsalze oder unsubstituierte Ammoniumsalze sein.

Solche Fettsäurederivate basieren typischerweise auf Fettsäuren wie Laurinsäure, Myristinsäure, Palmitinsäure, Ölsäure, Stearinsäure, Ricinolsäure, Behensäure oder Arachidinsäure, Kokosfettsäure, Talgfettsäure, Sojafettsäure und deren Hydrierungsprodukten.

Beispielhaft verwendbare Schaumstabilisatoren sind Mischungen aus Sulfosuccinamiden und Ammoniumstearaten, wobei diese bevorzugt ≥ 20 Gewichts-% bis ≤ 60 Gewichts-% besonders bevorzugt ≥ 30 Gewichts-% bis ≤ 50 Gewichts-% an Ammoniumstearaten und bevorzugt ≥ 40 Gewichts-%, bis ≤ 80 Gewichts-% besonders bevorzugt ≥ 50 Gewichts-% bis ≤ 70 Gewichts-% an Sulfosuccinamiden enthalten.

Weitere beispielhaft verwendbare Schaumstabilisatoren sind Mischungen aus Fettalkohol-Polyglykosiden und Ammoniumstearaten, wobei diese bevorzugt ≥ 20 Gewichts-% bis ≤ 60 Gewichts-% besonders bevorzugt ≥ 30 Gewichts-% bis ≤ 50 Gewichts-% an Ammoniumstearaten und bevorzugt ≥ 40 Gewichts-%, bis ≤ 80 Gewichts-% besonders bevorzugt ≥ 50 Gewichts-% bis ≤ 70 Gewichts-% an Fettalkohol-Polyglykosiden enthalten.

Weitere beispielhaft verwendbare Schaumstabilisatoren sind Ethylenoxid/Propylenoxid-Blockcopolymere.

Neben den Polyurethan-Dispersionen und den Zusatzstoffen kann die Zusammensetzung auch weitere Hilfsstoffe enthalten.

Beispiele für solche Hilfsstoffe sind Verdicker beziehungsweise Thixotropiermittel, Antioxidantien, Lichtschutzmittel, Emulgatoren, Weichmacher, Pigmente, Füllstoffe und/oder Verlaufshilfsmittel.

Als Verdicker können handelsübliche Verdicker wie Dextrin-, Stärke- oder Cellulosederivate wie Celluloseether oder Hydroxyethylcellulose, Polysaccharidderivate wie Gummi arabicum oder Guar, organische vollsynthetische Verdicker auf Basis von Polyacrylsäuren, Polyvinylpyrrolidonen, Poly(meth)acrylverbindungen oder Polyurethanen (assoziative Verdicker) sowie anorganische Verdicker wie Bentonite oder Kieselsäuren eingesetzt werden.

Grundsätzlich können die erfindungsgemäßen Zusammensetzungen auch Vernetzer wie unblockierte Polyisocyanate, Amid- und Amin-Formaldehydharze, Phenolharze, Aldehyd- und Ketonharze, wie zum Beispiel Phenol-Formaldehydharze, Resole, Furanharze, Harnstoffharze, Carbamidsäureesterharze, Triazinharze, Melaminharze, Benzoguanaminharze, Cyanamidharze oder Anilinharze enthalten.

In einer bevorzugten Rezeptur zur Herstellung der Polyurethan-Dispersionen werden die Komponenten A1) bis A4) und B1) bis B2) in den folgenden Mengen eingesetzt, wobei sich die Einzelmengen stets zu 100 Gewichts-% addieren:
≥ 5 Gewichts-% bis ≤ 40 Gewichts-% der Komponente A1);
≥ 55 Gewichts-% bis ≤ 90 Gewichts-% der Komponente A2);
≥ 0,5 Gewichts-% bis ≤ 20 Gewichts-% der Summe der Komponenten A3) und B2);
≥ 0,1 Gewichts-% bis ≤ 25 Gewichts-% der Summe der Komponenten A4) und B1), wobei bezogen auf die Gesamtmengen der Komponenten A1) bis A4) und B1) bis B2) ≥ 0,1 Gewichts-% bis ≤ 5 Gewichts-% an anionischen oder potentiell anionischen Hydrophilierungsmitteln aus A4) und/oder B1) verwendet werden.

In einer weiteren bevorzugten Rezeptur zur Herstellung der Polyurethan-Dispersionen werden die Komponenten A1) bis A4) und B1) bis B2) in den folgenden Mengen eingesetzt, wobei sich die Einzelmengen stets zu 100 Gewichts-% aufaddieren:
≥ 5 Gewichts-% bis ≤ 35 Gewichts-% der Komponente A1);
≥ 60 Gewichts-% bis ≤ 90 Gewichts-% der Komponente A2);
≥ 0,5 Gewichts-% bis ≤ 15 Gewichts-% der Summe der Komponenten A3) und B2);
≥ 0,1 Gewichts-% bis ≤ 15 Gewichts-% der Summe der Komponenten A4) und B1), wobei bezogen auf die Gesamtmengen der Komponenten A1) bis A4) und B1) bis B2) ≥ 0,2 Gewichts-% bis ≤ 4 Gewichts-% an anionischen bzw. potentiell anionischen Hydrophilierungsmitteln aus A4) und/oder B1) verwendet werden.

In einer ganz besonders bevorzugten Rezeptur zur Herstellung der Polyurethan-Dispersionen werden die Komponenten A1) bis A4) und B1) bis B2) in den folgenden Mengen eingesetzt, wobei sich die Einzelmengen stets zu 100 Gewichts-% aufaddieren:
≥ 10 Gewichts-% bis ≤ 30 Gewichts-% der Komponente A1);
≥ 65 Gewichts-% bis ≤ 85 Gewichts-% der Komponente A2);
≥ 0,5 Gewichts-% bis ≤ 14 Gewichts-% der Summe der Komponenten A3) und B2);
≥ 0,1 Gewichts-% bis ≤ 13,5 Gewichts-% der Summe der Komponenten A4) und B1), wobei bezogen auf die Gesamtmengen der Komponenten A1) bis A4) und B1) bis B2) ≥ 0,5 Gewichts-% bis ≤ 3,0 Gewichts-% an anionischen oder potentiell anionischen Hydrophilierungsmitteln aus A4) und/oder B1) verwendet werden.

Die Herstellung der anionisch hydrophilierten Polyurethan-Dispersionen kann in einer oder mehreren Stufe/-n in homogener oder bei mehrstufiger Umsetzung, teilweise in disperser Phase durchgeführt werden. Nach vollständig oder teilweise durchgeführter Polyaddition aus A1) bis A4) erfolgt ein Dispergier-, Emulgier- oder Lösungsschritt. Im Anschluss erfolgt gegebenenfalls eine weitere Polyaddition oder Modifikation in disperser Phase. Dabei können Verfahren wie beispielsweise Prepolymer-Mischverfahren, Acetonverfahren oder Schmelzdispergierverfahren verwendet werden. Bevorzugt wird das Aceton-Verfahren eingesetzt.

Bei der Herstellung nach dem Aceton-Verfahren werden üblicherweise die Bestandteile A2) bis A4) und die Polyisocyanatkomponente A1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von ≥ 50 °C bis ≤ 120 °C aufgeheizt. Zur Beschleunigung der Isocyanatadditionsreaktion können die in der Polyurethan-Chemie bekannten Katalysatoren eingesetzt werden.

Geeignete Lösungsmittel sind die üblichen aliphatischen, ketofunktionellen Lösemittel wie Aceton oder 2-Butanon, die nicht nur zu Beginn der Herstellung, sondern gegebenenfalls in Teilen auch später zugegeben werden können. Bevorzugt sind Aceton und 2-Butanon.

Andere Lösemittel wie Xylol, Toluol, Cyclohexan, Butylacetat, Methoxypropylacetat, N-Methylpyrrolidon, N-Ethylpyrrolidon, Lösemittel mit Ether- oder Estereinheiten können zusätzlich eingesetzt und ganz oder teilweise abdestilliert werden oder vollständig im Falle von N- Methylpyrrolidon, N-Ethylpyrrolidon in der Dispersion verbleiben. Bevorzugt werden aber außer den üblichen aliphatischen, ketofunktionellen Lösemitteln keine anderen Lösungsmittel verwendet.

Anschließend werden die gegebenenfalls zu Beginn der Reaktion noch nicht zugegebenen Bestandteile von A1) bis A4) zudosiert.

Bei der Herstellung des Polyurethan-Prepolymeren aus A1) bis A4) beträgt das Stoffmengenverhältnis von Isocyanatgruppen zu mit isocyanatreaktiven Gruppen beispielsweise > 1,05 bis ≤ 3,5, bevorzugt > 1,2 bis < 3,0 und besonders bevorzugt > 1,3 bis < 2,5.

Die Umsetzung der Komponenten A1) bis A4) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Neutralisationsschritt zur teilweisen oder vollständigen Überführung potentiell anionischer Gruppen in anionische Gruppen werden Basen wie tertiäre Amine, zum Beispiel Trialkylamine mit ≥ 1 bis ≤ 12, bevorzugt ≥ 1 bis ≤ 6 C-Atomen, besonders bevorzugt ≥ 2 bis ≤ 3 C-Atomen in jedem Alkylrest oder Alkalimetallbasen wie die entsprechenden Hydroxide eingesetzt.

Beispiele hierfür sind Trimethylamin, Triethylamin, Methyldiethylamin, Tripropylamin, N-Methylmorpholin, Methyldiisopropylamin, Ethyldiisopropylamin und Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind gegebenenfalls auch anorganische Basen, wie wässrige Ammoniaklösung oder Natrium- bzw. Kaliumhydroxid einsetzbar.

Bevorzugt sind Ammoniak, Triethylamin, Triethanolamin, Dimethylethanolamin oder Diisopropylethylamin sowie Natriumhydroxid und Kaliumhydroxid, besonders bevorzugt sind Natriumhydroxid und Kaliumhydroxid.

Die Stoffmenge der Basen kann zwischen ≥ 50 mol-% und < 125 mol%, bevorzugt zwischen > 70 mol-% und ≤ 100 mol% der Stoffmenge der zu neutralisierenden Säuregruppen betragen. Die Neutralisation kann auch gleichzeitig mit der Dispergierung erfolgen, indem das Dispergierwasser bereits das Neutralisationsmittel enthält.

Im Anschluss wird in einem weiteren Verfahrensschritt, falls noch nicht oder nur teilweise geschehen das erhaltene Prepolymer mit Hilfe von aliphatischen Ketonen wie Aceton oder 2-Butanon gelöst.

Bei der Kettenverlängerung in Stufe B) werden NH₂- und/oder NH-funktionelle Komponenten mit den noch verbliebenen Isocyanatgruppen des Prepolymers teilweise oder vollständig umgesetzt. Bevorzugt wird die Kettenverlängerung vor der Dispergierung in Wasser durchgeführt.

Zur Kettenterminierung werden üblicherweise Amine B2) mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin verwendet.

Werden zur teilweisen oder vollständigen Kettenverlängerung anionische oder potentiell anionische Hydrophilierungsmittel entsprechend der Definition B1) mit NH₂- oder NH-Gruppen eingesetzt, erfolgt die Kettenverlängerung der Prepolymere bevorzugt vor der Dispergierung.

Die aminischen Komponenten B1) und B2) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mit verwendet werden, so beträgt der Verdünnungsmittelgehalt in der in B) eingesetzten Komponente zur Kettenverlängerung bevorzugt ≥ 70 bis ≤ 95 Gewichts-%.

Die Dispergierung erfolgt bevorzugt im Anschluss an die Kettenverlängerung. Dazu wird das gelöste und kettenverlängerte Polyurethanpolymer gegebenenfalls unter starker Scherung, wie zum Beispiel starkem Rühren, entweder in das Dispergierwasser eingetragen oder es wird umgekehrt das Dispergierwasser zu den kettenverlängerte Polyurethanpolymerlösungen gerührt. Bevorzugt wird das Wasser in das gelöste kettenverlängerte Polyurethanpolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Restgehalt an organischen Lösemitteln in den Polyurethan-Dispersionen beträgt typischerweise ≤ 1,0 Gew.-%, bevorzugt ≤ 0,5 Gew.-%, bezogen auf die gesamte Dispersion.

Der pH-Wert der erfindungsgemäßen Polyurethan-Dispersionen beträgt typischerweise ≤ 9,0, bevorzugt ≤ 8,5, besonders bevorzugt weniger als ≤ 8,0 und liegt ganz besonders bevorzugt bei ≥ 6,0 bis ≤ 7,5.

Der Feststoffgehalt der Polyurethan-Dispersionen beträgt bevorzugt ≥ 40 bis ≤ 70 Gewichts-%, besonders bevorzugt ≥ 50 bis ≤ 65 Gewichts-%, ganz besonders bevorzugt ≥ 55 bis ≤ 65 Gewichts-% und insbesondere ≥ 60 bis ≤ 65 Gewichts-%.

Gemäß einer weiteren Ausführungsform der Erfindung ist vorgesehen, dass die Barriere-Folie zumindest in Bereich der Schweißnaht aus Materialen ausgewählt aus der Gruppe Polyurethan, Polystyrol, Polyether, Polyester, Polyamid, Polycarbonat, Polyether-Polyamid-Copolymeren, Polyacrylat, Polymethacrylat, Acrylnitril-Butadien-Styrol und/oder Polymaleat und vorzugsweise aus Polyurethan, Acrylnitril-Butadien-Styrol, Polyvinylchlorid und / oder Polycarbonat besteht. In diesem Fall wird eine besonders belastbare und haltbare Schweißnaht zwischen der Barriere-Folie und der Schaumschicht erhalten.

Möglich ist auch, dass die Barriere-Folie zumindest in Bereich der Schweißnaht aus einem thermoplastischen Polymer besteht, wobei es sich insbesondere auch um das für die Herstellung des Polymerschaums verwendete Polymer handeln kann. Ganz besonders bevorzugt ist, wenn die Barriere-Folie lineare Polyurethane enthält oder daraus besteht.

Weiter bevorzugt ist auch, wenn der umhüllte Artikel eine weitere Barriere-Folie und eine weitere Schaumschicht aufweist und die Elemente des Artikels insbesondere in der Reihenfolge Barriere-Folie, Schaumschicht, Funktionseinheit, Schaumschicht, Barriere-Folie angeordnet sind.

Ebenfalls bevorzugt ist, wenn das Schaumschicht aus dem thermoplastischen Polymerschaum besteht.

Die Funktionseinheit kann ein Sensor, insbesondere ein Sensor zur Messung von physiologischen Daten oder ein Wirkstoffdepot, insbesondere enthaltend einen pharmazeutischer Wirkstoff, sein.

Beispiele für Sensoren sind Herzton-Sensoren, Temperatur-Sensoren, EKG-Sensoren, Blutdruck-Sensoren, Blutzucker-Sensoren, Puls-Sensoren, Sauerstoffsättigungs-Sensoren, Lungenfunktions-Sensoren, Bildgebungs-Sensoren oder Sensoren zur Bestimmung der Hautfeuchtigkeit.

Es ist ebenfalls möglich, dass es sich bei der Funktionseinheit um LED-Lampen für die Lichttherapie handelt.

Beispiele für Wirkstoffdepots sind Iontophorese-Patches oder dick- bis dünnflüssige Wirkstoff Dispersionen.

Beispiele für Wirkstoffe sind Schmerzmittel, Antibiotika, Stoffe zur Hautregeneration, Insulin, Nicotin, Stoffe, die die Wundheilung unterstützen

Weiter bevorzugt ist auch, wenn die Barriere-Folie auf ihrer der Schaumschicht abgewandten Seite eine Klebeschicht aufweist.

Ganz besonders bevorzugt ist, wenn die Barriere-Folie zusammen mit der Schweißnaht die Schaumschicht und die Funktionseinheit vollständig einschließt.

Ein weiterer Gegenstand der Erfindung ist ein Verfahren zur Herstellung eines erfindungsgemäßen umhüllten Artikels, bei dem bei dem eine Funktionseinheit wenigstens bereichsweise mit einer Schaumschicht umhüllt und eine Barriere-Folie so um die Schaumschicht und die Funktionseinheit herum angeordnet wird, dass die Barriere-Folie die Schaumschicht und die Funktionseinheit umschließt, wobei die Schaumschicht einen thermoplastischen Polymer-schaum umfasst, der zumindest bereichsweise über eine Schweißnaht mit der Barriere-Folie verbunden wird.

Bei einer besonders bevorzugten Ausführungsform des erfindungsgemäßen Verfahrens enthält der Polymerschaum lineare Polyurethane.

Weiter bevorzugt ist, wenn der Polymerschaum hergestellt wird, indem eine Zusammensetzung umfassend eine wässrige, anionisch hydrophilierte Dispersion der linearen Polyurethane aufgeschäumt und getrocknet wird.

Bei dem Verfahren kann insbesondere eine Zusammensetzung verwendet wird, die Zusatzstoffe ausgewählt aus der Gruppe Fettsäureamide, Sulfosuccinamide, Kohlenwasserstoffsulfonate, Kohlenwasserstoffsulfate, Fettsäuresalze, Alkylpolyglycoside und/oder Ethylenoxid/Propylenoxid-Blockcopolymere und bevorzugt Ethylenoxid/Propylenoxid-Blockcopolymere gemäß der allgemeinen Formel (I): 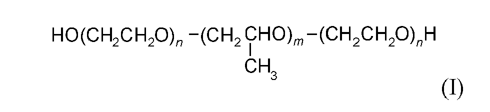 mit n ≥ 2 bis ≤ 200 m ≥ 10 bis ≤ 60 umfasst.

Bevorzugt ist auch eine Ausführungsform des erfindungsgemäßen Verfahrens, bei dem die wässrige, anionisch hydrophilierte Dispersion linearer Polyurethane hergestellt wird, indem
A) isocyanatfunktionelle Prepolymere bereitgestellt werden, die aus einer Reaktionsmischung umfassend
   A1) organische Polyisocyanate und
   A2) polymere Polyole, bevorzugt mit zahlenmittleren Molekulargewichten von ≥ 400 g/mol bis ≤ 8000 g/mol und OH-Funktionalitäten von ≥ 1,5 bis ≤ 6,
   erhältlich sind und
B) die freien NCO-Gruppen der Prepolymere ganz oder teilweise mit
   B1) isocyanatreaktiven anionischen oder potentiell anionischen Hydrophilierungsmitteln
unter Kettenverlängerung umgesetzt werden und die Prepolymere vor, während oder nach Schritt B) in Wasser dispergiert werden, wobei weiterhin in der Reaktionsmischung vorliegende potentiell ionische Gruppen durch teilweise oder vollständige Umsetzung mit einem Neutralisationsmittel in die ionische Form überführt werden.

Bei einer besonders bevorzugten Ausführungsform bestehen die Barriere-Folie zumindest in Bereich der Verschweißung aus Materialen ausgewählt aus der Gruppe Polyurethan, Polyethylen, Polypropylen, Polyvinylchlorid, Polystyrol, Polyether, Polyester, Polyamid, Polycarbonat, Polyether-Polyamid-Copolymeren, Polyacrylat, Polymethacrylat, Acrylnitril-Butadien-Styrol und/oder Polymaleat und vorzugsweise aus Polyurethan, Acrylnitril-Butadien-Styrol, Polyvinylchlorid und / oder Polycarbonat.

Der Polymerschaum und das Bauteil können insbesondere unter einem Druck von ≥ 50 bis < 150 bar bei einer Temperatur von ≥ 100 bis ≤ 200 °C verschweißt werden.

Gegenstand der Erfindung ist schließlich auch ein nach dem erfindungsgemäßen Verfahren erhältlicher Bauteilverbund.

### Beispiele:

Die Erfindung wird im Folgenden an Hand von Beispielen näher erläutert.

Sofern nicht abweichend gekennzeichnet, beziehen sich alle Prozentangaben auf das Gewicht.

### Methoden:

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

Die Bestimmung der mittleren Teilchengrößen (angegeben ist das Zahlenmittel) der Polyurethan-Dispersion 1 erfolgte mittels Laserkorrelations-Spektroskopie (Gerät: Malvern Zetasizer 1000, Malver Inst. Limited).

Die für die Schaumadditive angegebenen Gehalte beziehen sich auf wässrige Lösungen.

Die Molekulargewichte wurden mittels Gelpermeationschromatographie (GPC) wie folgt bestimmt: Die Kalibrierung erfolgt mit Polystyrol-Standards mit einem Molekulargewichten von Mp 1.000.000 bis 162. Als Eluent wird Tetrahydrofuran p.A. verwendet. Die folgenden Parameter werden bei der Doppelmessung eingehalten: Entgasung: Online - Degasser; Durchfluß: 1 ml/Min; Analysenzeit: 45 Minuten; Detektoren: Refraktometer und UV-Detektor; Injektionsvolumen: 100 µl - 200 µl. Die Berechnung der Molmassenmittelwerte M_{w}; Mₙ und Mₚ sowie der Polydispersität M_{w}/Mₙ erfolgt softwaregestützt. Basislinienpunkte und Auswertegrenzen werden entsprechend der DIN 55672 Teil 1 festgelegt.

### Substanzen und Abkürzungen:

Diaminosulfonat: NH₂-CH₂CH₂-NH-CH₂CH₂-SO₃Na (45 %ig in Wasser)

Desmophen^{®} C2200:Polycarbonatpolyol, OH-Zahl 56 mg KOH/g, zahlenmittleres Molekulargewicht 2000 g/mol (Bayer MaterialScience AG, Leverkusen, DE)

PolyTHF^{®} 2000:Polytetramethylenglykolpolyol, OH-Zahl 56 mg KOH/g, zahlenmittleres Molekulargewicht 2000 g/mol (BASF AG, Ludwigshafen, DE)

PolyTHF^{®} 1000:Polytetramethylenglykolpolyol, OH-Zahl 112 mg KOH/g, zahlenmittleres zahlenmittleres Molekulargewicht 1000 g/mol (BASF AG, Ludwigshafen, DE)

Polyether LB 25:monofunktioneller Polyether auf Ethylenoxid-/Propylenoxidbasis, zahlenmittleres Molekulargewicht 2250 g/mol, OH-Zahl 25 mg KOH/g (Bayer MaterialScience AG, Leverkusen, DE)

Impranil^{®} DLUaliphatische Polycarbonatpolyetherpolyurethan-Dispersion, Feststoffge-halt 60 %, pH-Wert 8,0 (Bayer MaterialScience AG, Leverkusen, DE)

### Bespiel 1: Herstellung einer Polyurethan-Dispersion

1077,2 g PolyTHF^{®} 2000, 409,7 g PolyTHF^{®} 1000, 830,9 g Desmophen^{®} C2200 und 48,3 g Polyether LB 25 wurden in einer Standard-Rührapparatur auf 70 °C aufgeheizt. Anschließend wurde bei 70 °C innerhalb von 5 min ein Gemisch aus 258,7 g Hexamethylendiisocyanat und 341,9 g Isophorondiisocyanat zugegeben und bei 120°C gerührt, bis der theoretische NCO-Wert erreicht oder leicht unterschritten war. Das fertige Prepolymer wurde mit 4840 g Aceton gelöst und dabei auf 50 °C abgekühlt und anschließend wurde eine Lösung aus 27,4 g Ethylendiamin, 127,1 g Isophorondiamin, 67,3 g Diaminosulfonat und 1200 g Wasser innerhalb von 10 min zudosiert. Die Nachrührzeit betrug 10 min. Dann wurde durch Zugabe von 654 g Wasser dispergiert. Es folgte die Entfernung des Lösemittels durch Destillation im Vakuum.

Die erhaltene Polyurethan-Dispersion hatte nachfolgende Eigenschaften:

| | |
|---|---|
| Feststoffgehalt: | 61,6 % |
| Partikelgröße (LKS): | 528 nm |
| pH (23°C): | 7,5 |

### Beispiel 2: Herstellung eines Polymer-Schaums aus der Polyurethan-Dispersion

200 g der zuvor hergestellten Polyurethan-Dispersion wurden mit 15,5 g wässriger Pluronic PE6800 (BASF; Ludwigshafen, Deutschland) Lösung (40-Gew-%) vermischt und unter Verwendung eines handelsüblichen Handrührgerätes (Rührer aus gebogenem Draht) auf 250 g/l Schaumdichte aufgeschlagen. Danach wurden die Schäume mittels eines Filmziehgerätes (Rakel) mit Spalthöhe 1,5 mm auf nicht haftendes Papier aufgezogen und in einem Umluftofen bei 120°C in 10 Minuten getrocknet. Es wurde ein Bogen des Schaums erhalten.

### Beispiel 3: Herstellung eines umhüllten Artikels

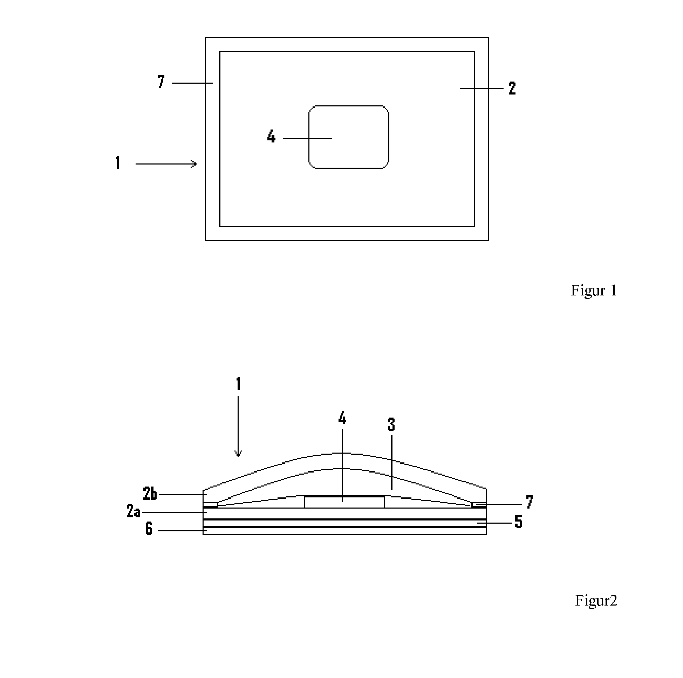

Die Figuren 1 und 2 zeigen einen umhüllten Artikel. Dabei ist
- Figur 1: eine Aufsicht des umhüllten Artikels und
- Figur 2: eine Querschnittsansicht des umhüllten Artikels.

Der in den Figuren dargestellte umhüllte Artikel 1 ist ein Sensor zur Befestigung am menschlichen Körper. Er umfasst eine untere Barriere-Folie 2a, eine obere Barriere-Folie 2b, eine Schaumschicht 3, eine Funktionseinheit 4, eine Klebeschicht 5, eine Abdeckschicht 6 und eine Schweißnaht 7.

Die Elemente des umhüllten Körpers 1 sind in der folgenden Weise angeordnet: Die unterste Schicht des Aufbaus stellt die Abdeckschicht 6 dar. Diese ist flächig mit der darüber liegenden Klebeschicht 5 verbunden und kann von dieser leicht abgezogen werden. Die Klebeschicht 5 ist auf ihrer der Abdeckschicht 6 abgewandten Seite flächig auf die Unterseite der unteren Barriere-Folie 2a aufgebracht. Auf der Oberseite der unteren Barriere-Folie 2a liegt mittig die Funktionseinheit 4 auf. Über der Funktionseinheit 4 ist die Schaumschicht 3 angeordnet, die auf der Funktionseinheit 4 und der unteren Barriere-Folie 2a aufliegt und die Funktionseinheit 4 bereichsweise umhüllt. Auf der Schaumschicht 3 und der unteren Barriere-Folie 2a liegt wiederum die obere Barriere-Folie 2b auf. Die untere Barriere-Folie 2a, die obere Barriere-Folie 2b und die Schaumschicht 3 sind im Randbereich des Artikels 1 über die umlaufende Schweißnaht 7 miteinander verbunden. Die Barriere-Folien 2a und 2b umschließen die Schaumschicht 3 und die Funktionseinheit 4.

Die Barriere-Folien 2a, 2b bestehen aus Polyurethan und sind für Feuchtigkeit und Schmutz weitestgehend undurchlässig. Sie haben eine Dicke von 0,025 bis 1 mm und sind flexibel. Die Schaumschicht 3 besteht aus dem im Beispiel 2 hergestellten Polymer-Schaum. Bei der Funktionseinheit 1 handelt es sich um einen handelsüblichen elektrischen Sensor zur Bestimmung von Herztönen Die Klebeschicht 5 besteht aus einem handelsüblichen hautverträglichen Klebstoff. Bei der Abdeckschicht 6 handelt es sich um ein silikonisiertes Papier.

Der umhüllte Artikel 1 wird in der folgenden Weise hergestellt: In einem ersten Schritt wird aus dem im Beispiel 2 hergestellten Bogen des Polymer-Schaums die Schaumschicht 3 auf die gewünschte Form zugeschnitten. Dann wird auf die untere Barriere-Folie 2a die Funktionseinheit 4 und auf der unteren Barriere-Folie 2a und die Funktionseinheit 4 die obere Barriere-Folie 2b aufgelegt. Um die Schweißnaht 7 herzustellen, werden anschließend die Bariere-Folien 2a, 2b und die Schaumschicht 3 im Randbereich auf 100 °C erhitzt und die Barriere-Folien 2a, 2b mit einem Druck von 200 bar für 60 Sekunden unter Komprimierung des dazwischen liegenden Bereichs der Schaumschicht 3 gegeneinander gepresst.

Auf diese Weise wurde ein besonders dichter und mechanisch belastbarer umhüllten umhüllter Artikel erhalten, der gegen Beschädigungen geschützt und angenehm zu tragen ist.

## Patentansprüche

1. Umhüllter Artikel (1) umfassend wenigstens eine Barriere-Folie (2a, 2b), eine Schaumschicht (3) und eine Funktionseinheit (4), wobei die Schaumschicht (3) die Funktionseinheit (4) zumindest bereichweise umhüllt und die Barriere-Folie (2a, 2b) die Schaumschicht (3) und die Funktionseinheit (4) umschließt, **dadurch gekennzeichnet, dass** die Schaumschicht (3) einen thermoplastischen Polymerschaum beinhaltet, der zumindest bereichsweise über eine Schweißnaht (7) mit der Barriere-Folie (2a, 2b) verbunden ist.

2. Artikel (1) nach Anspruch 1, **dadurch gekennzeichnet, dass** der Polymerschaum lineare Polyurethane enthält.

3. Artikel (1) nach Anspruch 2, **dadurch gekennzeichnet, dass** der Polymerschaum erhältlich ist, indem eine Zusammensetzung umfassend eine wässrige, anionisch hydrophilierte Dispersion der linearen Polyurethane aufgeschäumt und getrocknet wird.

4. Artikel (1) nach Anspruch 3, **dadurch gekennzeichnet, dass** die wässrige, anionisch hydrophilierte Dispersion linearer Polyurethane erhältlich ist, indem
A) isocyanatfunktionelle Prepolymere bereitgestellt werden, die aus einer Reaktionsmischung umfassend
A1) organische Polyisocyanate und
A2) polymere Polyole, bevorzugt mit zahlenmittleren Molekulargewichten von ≥ 400 g/mol bis ≤ 8000 g/mol und OH-Funktionalitäten von ≥ 1,5 bis < 6,
erhältlich sind und
B) die freien NCO-Gruppen der Prepolymere ganz oder teilweise mit
B1) isocyanatreaktiven anionischen oder potentiell anionischen Hydrophilierungsmitteln
unter Kettenverlängerung umgesetzt werden und die Prepolymere vor, während oder nach Schritt B) in Wasser dispergiert werden, wobei weiterhin in der Reaktionsmischung vorliegende potentiell ionische Gruppen durch teilweise oder vollständige Umsetzung mit einem Neutralisationsmittel in die ionische Form überführt werden.

5. Artikel (1) nach einem der Ansprüche 3 oder 4, **dadurch gekennzeichnet, dass** die Zusammensetzung Zusatzstoffe ausgewählt aus der Gruppe Fettsäureamide, Sulfosuccinamide, Kohlenwasserstoffsulfonate, Kohlenwasserstoffsulfate, Fettsäuresalze, Alkylpolyglycoside und/oder Ethylenoxid/Propylenoxid-Blockcopolymere und bevorzugt Ethylenoxid/Propylenoxid-Blockcopolymere gemäß der allgemeinen Formel (I): 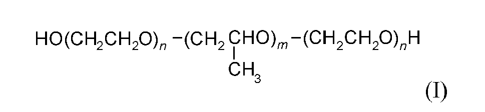 mit n ≥ 2 bis ≤ 200 m ≥ 10 bis ≤ 60 umfasst.

6. Artikel (1) nach einem der Ansprüche 1 bis 5, **dadurch gekennzeichnet, dass** die Barriere-Folie (2a, 2b) zumindest in Bereich der Schweißnaht (7) aus Materialen ausgewählt aus der Gruppe Polyurethan, Polystyrol, Polyether, Polyester, Polyamid, Polycarbonat, Polyether-Polyamid-Copolymeren, Polyacrylat, Polymethacrylat, Acrylnitril-Butadien-Styrol und/oder Polymaleat und vorzugsweise aus Polyurethan, Acrylnitril-Butadien-Styrol, Polyvinylchlorid und / oder Polycarbonat besteht.

7. Artikel (1) nach einem der Ansprüche 1 bis 6, **dadurch gekennzeichnet, dass** er eine weitere Barriere-Folie (2a, 2b) und eine weitere Schaumschicht aufweist und die Elemente des Artikels (1) insbesondere in der Reihenfolge Barriere-Folie, Schaumschicht, Funktionseinheit, Schaumschicht, Barriere-Folie angeordnet sind.

8. Artikel (1) nach einem der Ansprüche 1 bis 7, **dadurch gekennzeichnet, dass** die Barriere-Folie (2a, 2b) auf ihrer der Schaumschicht (3) abgewandten Seite eine Klebeschicht (5) aufweist.

9. Artikel (1) nach einem der Ansprüche 1 bis 8, **dadurch gekennzeichnet, dass** die Barriere-Folie (2a, 2b) zusammen mit der Schweißnaht (7) die Schaumschicht (3) und die Funktionseinheit (4) vollständig einschließt.

10. Artikel (1) nach einem der Ansprüche 1 bis 9, **dadurch gekennzeichnet, dass** die Funktionseinheit (4) ein Sensor, insbesondere ein Sensor zur Messung von physiologischen Daten oder ein Wirkstoffdepot, insbesondere enthaltend einen pharmazeutischer Wirkstoff, ist.

11. Verfahren zur Herstellung eines umhüllten Artikels (1), bei dem eine Funktionseinheit (4) wenigstens bereichsweise mit einer Schaumschicht (3) umhüllt und eine Barriere-Folie (2a, 2b) so um die Schaumschicht (3) und die Funktionseinheit (4) herum angeordnet wird, dass die Barriere-Folie (2a, 2b) die Schaumschicht (3) und die Funktionseinheit (4) umschließt, **dadurch gekennzeichnet**, die Schaumschicht (3) einen thermoplastischen Polymerschaum umfasst, der zumindest bereichsweise über eine Schweißnaht (7) mit der Barriere-Folie (2a, 2b) verbunden wird.

12. Verfahren nach Anspruch 11, **dadurch gekennzeichnet, dass** der Polymerschaum lineare Polyurethane enthält.

13. Verfahren nach Anspruch 12, **dadurch gekennzeichnet, dass** der Polymerschaum hergestellt wird, indem eine Zusammensetzung umfassend eine wässrige, anionisch hydrophilierte Dispersion der linearen Polyurethane aufgeschäumt und getrocknet wird.

14. Verfahren nach Anspruch 13, **dadurch gekennzeichnet, dass** eine Zusammensetzung verwendet wird, die Zusatzstoffe ausgewählt aus der Gruppe Fettsäureamide, Sulfosuccinamide, Kohlenwasserstoffsulfonate, Kohlenwasserstoffsulfate, Fettsäuresalze, Alkylpolyglycoside und/oder Ethylenoxid/Propylenoxid-Blockcopolymere und bevorzugt Ethylenoxid/Propylenoxid-Blockcopolymere gemäß der allgemeinen Formel (I): 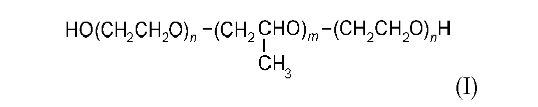 mit n ≥ 2 bis ≤ 200 m ≥ 10 bis ≤ 60 umfasst.

15. Verfahren nach einem der Ansprüche 13 oder 14, **dadurch gekennzeichnet, dass** die wässrige, anionisch hydrophilierte Dispersion linearer Polyurethane hergestellt wird, indem
A) isocyanatfunktionelle Prepolymere bereitgestellt werden, die aus einer Reaktionsmischung umfassend
A1) organische Polyisocyanate und
A2) polymere Polyole, bevorzugt mit zahlenmittleren Molekulargewichten von ≥ 400 g/mol bis ≤ 8000 g/mol und OH-Funktionalitäten von ≥ 1,5 bis < 6,
erhältlich sind und
B) die freien NCO-Gruppen der Prepolymere ganz oder teilweise mit
B1) isocyanatreaktiven anionischen oder potentiell anionischen Hydrophilierungsmitteln
unter Kettenverlängerung umgesetzt werden und die Prepolymere vor, während oder nach Schritt B) in Wasser dispergiert werden, wobei weiterhin in der Reaktionsmischung vorliegende potentiell ionische Gruppen durch teilweise oder vollständige Umsetzung mit einem Neutralisationsmittel in die ionische Form überführt werden.

16. Verfahren nach einem der Ansprüche 11 bis 15, **dadurch gekennzeichnet, dass** die Barriere-Folie (2a, 2b) zumindest in Bereich der Schweißnaht (7) aus Materialen ausgewählt aus der Gruppe Polyurethan, Polystyrol, Polyether, Polyester, Polyamid, Polycarbonat, Polyether-Polyamid-Copolymeren, Polyacrylat, Polymethacrylat, Acrylnitril-Butadien-Styrol und/oder Polymaleat und vorzugsweise aus Polyurethan, Acrylnitril-Butadien-Styrol, Polyvinylchlorid und / oder Polycarbonat besteht.

17. Verfahren nach einem der Ansprüche 10 bis 16, **dadurch gekennzeichnet, dass** die Schaumschicht (3) und die Barriere-Folie (2a, 2b) unter einem Druck von ≥ 50 bis ≤ 150 bar bei einer Temperatur von ≥ 100 bis ≤ 200 °C verschweißt werden.

18. Artikel (1), erhältlich nach einem Verfahren gemäß einem der Ansprüche 11 bis 17.
